# FASCICULE DE BREVET EUROPEEN

(11) **EP 0 500 466 B1**
(45) Date de publication et mention de la délivrance du brevet: **11.10.1995**
(21) Numéro de dépôt: 92400448.4
(22) Date de dépôt: 20.02.1992
(51) Int. Cl.: H01R 13/52, G02B 6/38

(54) **Dispositif pour obturer une cavité de contact d'un connecteur électrique ou optique**
Verschluss für die Kontaktaufnahme eines elektrischen oder optischen Steckverbinders
Shutting device for the contact cavity of an electrical or optical connector

(30) Priorité: 22.02.1991 FR 9102166
(43) Date de publication de la demande: 26.08.1992
(73) Titulaire: DASSAULT-AVIATION, F-75008 Paris (FR)
(72) Inventeur: Dejardin, Didier, F-77330 Ozoir la Ferrière (FR); Pezzetta, Aldo, F-78750 Mareil Marly (FR)
(74) Mandataire: Colas, Jean-Pierre

(56) Documents cités:
- EP-A- 0 305 869
- EP-A- 0 322 051
- GB-A- 2 193 051
- US-A- 4 964 689
- US-A- 4 993 964

## Description

La présente invention est relative à un procédé pour obturer une cavité femelle d'un connecteur électrique et/ou optique.

Il est fréquent, dans la technique moderne, d'utiliser des correcteurs assemblables pour transmettre de l'énergie ou des signaux électriques et/ou optiques. Habituellement, une partie de connecteur qui est fixe ou mobile est équipée d'un certain nombre de pièces de contact femelles et est reliée à une ou plusieurs sources d'énergie ou de signaux, et une autre partie du connecteur est équipée de pièces de contact mâles et est reliée à un organe utilisateur d'énergie et/ou de signaux.

Il est fréquent que l'organe utilisateur n'utilise pas toutes les énergies (tensions électriques par exemple) et tous les signaux qui sont disponibles à la partie du connecteur qui comporte les prises femelles, et qu'on appellera, pour simplifier, la partie "femelle", l'autre partie étant appelée la partie "mâle". Pour des raisons de normalisation, on utilise alors une partie mâle dont une partie des pièces de contact ne sont pas correctées, ou bien, par économie, remplacées par de fausses pièces de contact de même forme, mais en une matière moins coûteuse, par exemple une matière élastique.

Il arrive plus rarement qu'on décide de ne pas connecter une pièce de contact femelle. Dans ce cas, on laisse cette pièce de contact en place, de façon à assurer l'isolement de la cavité qui la contient par rapport à l'atmosphère. On aurait pu songer à la remplacer par une pièce en matière plastique, moins coûteuse, mais la réalisation d'une telle pièce serait relativement onéreuse par le fait qu'il s'agirait d'une pièce femelle, et cette solution n'a pas été proposée. La figure 1 du document US-A-4 993 964 montre un procédé selon la première partie de la revendication 1.

La présente invention a pour but de fournir un procédé d'utilisation d'un correcteur qui procure un coût réduit par rapport à la pratique courante, tout en assurant un bon isolement, vis-à-vis de l'extérieur, des cavités femelles non utilisées.

Pour obtenir ce résultat, l'invention fournit un procédé de mise en oeuvre d'un connecteur électrique ou optique, formé de deux parties assemblables dont l'une comprend un support dit "mâle" traversé par au moins une cavité dite "mâle" destinée à recevoir une pièce de contact mâle, ce support étant solidaire d'une douille de maintien et protection dite "bloc arrière" traversée par un alésage de diamètre calculé pour laisser passer un conducteur reliant la pièce de contact mâle à l'extérieur, en assurant un contact étanche avec ce conducteur, et l'autre partie comprend un support dit " femelle" traversé par au moins une cavité dite "femelle" destinée à recevoir une pièce de contact femelle, ce support étant solidaire d'un "bloc arrière" traversé par un alésage de diamètre calculé pour laisser passer un conducteur reliant la pièce de contact femelle à l'extérieur en assurant un contact étanche avec ce conducteur, procédé dans lequel, s'il n'est pas prévu de pièce femelle dans une cavité femelle, on prévoit un obturateur comprenant une partie cylindrique, de diamètre sensiblement égal à celui du conducteur correspondant, une partie de prise, et un épaulement radial de diamètre supérieur à celui de ladite partie cylindrique, et on enfonce ledit obturateur dans le passage correspondant, ce procédé ayant pour particularité que l'on enfonce ladite partie cylindrique en avant, jusqu'à ce que ledit épaulement vienne en appui contre la face extérieure du "bloc arrière", la longueur de la partie cylindrique de l'obturateur étant calculée pour que, après mise en place de l'obturateur, cette partie cylindrique assure une étanchéité convenable de la cavité femelle vis-à-vis de l'extérieur, mais qu'elle ne puisse pas venir en contact avec une pièce de contact mâle pénétrant dans ladite cavité femelle quand le connecteur est assemblé.

De préférence, dans le cas où la cavité mâle présente un épaulement dirigé à l'opposé de la partie femelle, après assemblage du connecteur, cette cavité étant alignée avec une cheminée tubulaire prévue dans un tapis interfacial souple porté par la face du support mâle qui est tournée vers le support femelle, on utilise un obturateur dont la partie de prise présente un second épaulement orienté à l'opposé de celui qui est adjacent à la partie cylindrique, et l'obturateur se prolonge, au-delà de ce second épaulement par une tige cylindrique apte à pénétrer dans la cavité mâle au-delà de son épaulement et dans ladite cheminée tubulaire sans dépasser sensiblement celle-ci quand le second épaulement de l'obturateur est en appui sur l'épaulement de la cavité mâle, et la longueur de la partie cylindrique de l'obturateur est suffisante pour que, lorsque le second épaulement est en appui sur l'épaulement de la cavité mâle, elle fasse saillie à l'extérieur de la douille de maintien, si bien qu'elle assure l'étanchéité de la cavité mâle et, en outre, constitue une partie de prise qui permet de l'extraire si on le désire.

De cette façon, l'obturateur peut également être utilisé, en cas de besoin, pour obturer la cavité mâle, ce qui est une source supplémentaire d'économies.

L'invention va maintenant être exposée plus en détail à l'aide d'un exemple pratique, illustré à l'aide des dessins, parmi lesquels :

Figure 1 est une coupe d'un connecteur simple, câblé et pourvu de pièces de contact mâle et femelle de transmission de puissance.

Figures 2A et 2B montrent les extrémités des pièces de contact mâle et femelle dans le cas de conducteurs coaxiaux.

Figures 3A et 3B, les extrémités des pièces de contact mâle et femelle dans le cas de conducteurs optiques.

Figure 4 montre un correcteur identique à celui de la figure 1, mais où la pièce de contact femelle est remplacée par une pièce d'obturation selon l'invention, et

Figure 5 montre un correcteur identique à celui de la figure 1, mais où les deux pièces de contact ont été remplacées par des obturateurs selon l'invention.

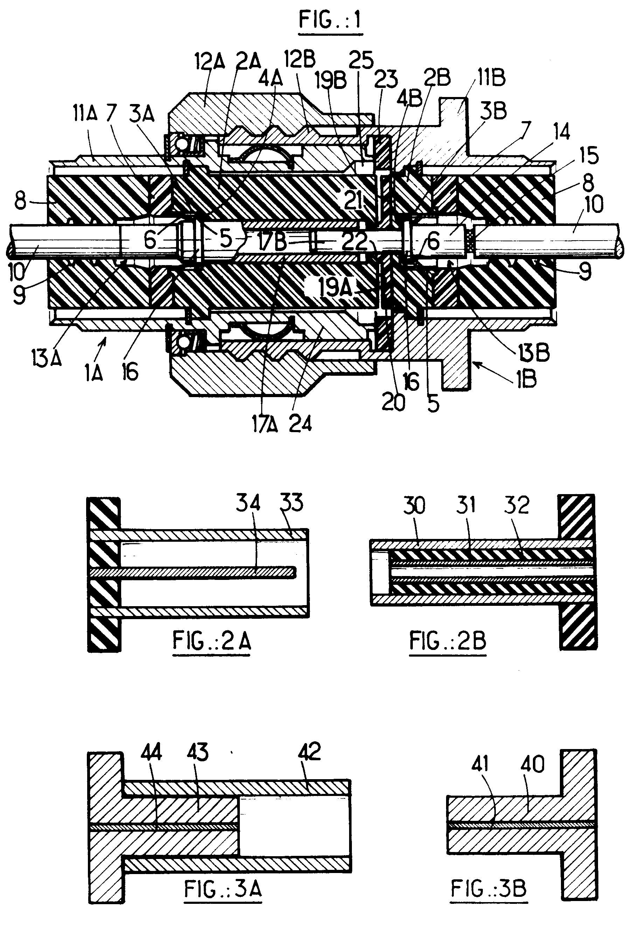

La figure 1 est une coupe d'un correcteur à contact unique, mais le lecteur comprendra que les éléments essentiels sont les mêmes pour un connecteur à plusieurs contacts.

Le connecteur représenté comprend une partie "femelle" 1A, qui comporte une pièce de contact femelle, et une partie "mâle" 1B, qui comporte une pièce de contact mâle. Ces deux parties de connecteur comprennent un certain nombre d'éléments analogues, qui exercent la même fonction. Les repères de ces éléments comportent le même nombre suivi de la lettre A ou B selon qu'ils font partie de la partie femelle ou de la partie mâle, ou non suivi d'une lettre s'il n'est pas nécessaire de les distinguer.

Chaque partie de connecteur 1A, 1B représentée comprend un support 2A, 2B de pièces de contact, en matière plastique rigide, traversé par un alésage 3A, 3B, en deux parties de diamètres différents séparées par un épaulaient 4A, 4B. La forme des pièces de supports 2A, 2B n'est pas la même pour les parties femelle et mâle, ainsi que cela sera exposé plus loin de façon détaillée.

Chaque alésage 3A, 3B contient une bague 5 en métal élastique, portant des languettes 6 dirigées vers l'axe. La bague 5 est maintenue en place par une contrepièce 7, en matière plastique rigide, fixée sur le support 2 et pourvue d'un alésage de diamètre légèrement inférieur à celui de la partie la plus large de l'alésage 3A, 3B.

Chaque support 2A, 2B comporte une douille de maintien et protection 8, ou "bloc arrière", coaxiale à l'alésage 3A, 3B. Ce bloc arrière 8 est en un matériau semi-rigide, à savoir du caoutchouc durci, et présente, du côté opposé au support 2, des nervures internes radiales 9, de section arrondie, qui délimitent des passages resserrés, dont le diamètre au repos est légèrement inférieur au diamètre extérieur d'un câble 10 qu'on décrira plus loin. L'ensemble formé par le support 2A, 2B, la contrepièce 7 et le bloc arrière 8 se trouve à l'intérieur d'une pièce de couplage 11A, 11B.

Les pièces de couplage 11A, 11B sont conçues pour coulisser l'une dans l'autre, de façon à assurer le centrage relatif de deux parties de connecteur 1A, 1B, et l'une des pièces de couplage 11A porte un écrou 12A monté rotatif et qui est destiné à coopérer avec un filetage 12B porté par l'autre pièce de couplage. Cette fixation peut être remplacée par une liaison à baïonnette.

La cavité définie par l'alésage 3A, 3B et l'intérieur du bloc arrière 8 est occupée en partie par l'extrémité du câble 10, et par la pièce de contact 13A, 13B qui lui est reliée. Cette pièce de contact est en métal, essentiellement un bronze au béryllium, et comprend trois parties : un tube de sertissage 14, destiné à être serti sur l'extrémité 15 dénudée du câble 10, une bride de maintien 16 solidaire du tube de sertissage 14, et un élément de contact 17A, 17B, femelle ou mâle. Dans l'exemple représenté, l'élément de contact femelle 17A est un tube métallique fermé au voisinage de la bride 16, et ouvert à l'extrémité opposée. Il peut comporter des fentes longitudinales, non représentées, pour augmenter sa souplesse. L'élément de contact mâle 17B, dans l'exemple représenté, est cylindrique, massif, avec seulement un chanfrein 18 vers son extrémité opposée à la bride 16.

Le diamètre intérieur de l'élément de contact femelle 17A et le diamètre extérieur de l'élément de contact mâle 17B sont choisis pour assurer un bon contact électrique entre ces éléments. Comme le montre la figure 1, la longueur de l'élément de contact femelle 17A n'est pas très différente de celle de l'élément de contact, mais l'épaulement 4A du support femelle 2A est à une distance relativement importante de la face frontale 19A de ce support, c'est-à-dire la face qui est tournée vers la partie opposée du connecteur, alors que l'épaulement 4B du support mâle 2B est à une distance faible de la face frontale 19B de ce dernier support. La construction est telle que l'extrémité de l'élément de contact femelle 17A est à l'intérieur du support correspondant 2A, alors que l'élément de contact mâle 17B pénètre dans l'alésage 3A du support femelle 2A.

Le diamètre extérieur de chaque élément de contact 17A, 17B est tel qu'il passe avec un faible peu dans la partie étroite de l'alésage 3A, 3B correspondant. La bride 16 est maintenue en place entre l'épaulement 4A, 4B de l'alésage 3A, 3B et l'extrémité des languettes 6 de la bague 5.

La face frontale 19A du support mâle 2A porte un "tapis interfacial" 20, c'est-à-dire un disque en caoutchouc souple, pourvu, sur sa face opposée au support 2A, d'une cheminée tubulaire 21, dont le diamètre au repos est légèrement inférieur à celui de l'élément de contact 17A. Lorsque le connecteur est monté, la face frontale 19A du support femelle 2A vient en appui sur le bord extérieur de la cheminée 21 par une surface en forme de cône creux 22, qui est coaxiale à la pièce de contact, et vient serrer la cheminée contre l'élément de contact. Un joint d'étanchéité 23, porté par la pièce de couplage 11, est serré par un manchon interne 24 de la pièce de couplage de l'autre partie de connecteur, de façon à isoler de l'atmosphère extérieur l'espace 25 situé entre les deux parties de connecteur.

Le montage d'une partie de connecteur se déduit aisément de ce qui précède. Après avoir fixé la pièce de contact 13A ou 13B sur l'extrémité dénudée 15 du fil par sertissage du tube de sertissage 14, on introduit la pièce de contact dans la cavité en écartant les nervures 9 du bloc arrière 8, et on la fait avancer jusqu'à ce que la bride 16 dépasse les languettes 6. La pièce de contact est alors immobilisée entre ces languettes et l'épaulement 4.

Pour retirer la pièce de contact, on introduit, en passant entre les nervures 9 et le câble 10, un outil approprié, à extrémité tubulaire, appelé "plume", qui repousse les languettes 6 radialement, ce qui permet d'extraire la pièce de contact par traction sur le câble.

Les figures 2A, 2B, 3A, 3B illustrent des formes différentes de pièces de contact.

Les figures 2A, 2B montrent une pièce de contact coaxiale dans laquelle la pièce de contact mâle, au lieu d'être un cylindre plein, est un cylindre creux métallique 30 à l'intérieur duquel se trouve un deuxième cylindre creux également métallique 31, relié à l'âme d'un câble coaxial, non représentée, et isolé par un manchon isolant 32 du tube extérieur 30, lequel est relié au blindage du câble coaxial. La pièce de contact femelle contient, quant à elle, un tube extérieur métallique 33, relié au blindage du câble correspondant, et une aiguille centrale 34, reliée à l'âme du câble. Le diamètre intérieur du tube 33 permet un bon contact électrique avec le tube extérieur 30 de l'élément mâle, alors que le diamètre extérieur de l'aiguille 34 permet un bon contact avec la surface intérieur du tube 32.

Les figures 3A et 3B montrent une pièce de connexion pour relier ensemble des fibres optiques. La pièce mâle comprend une partie cylindrique 40, en matière métallique ou céramique, qui est traversée axialement par le prolongement d'une fibre optique 41, dont l'extrémité frontale est soigneusement polie. La pièce de contact femelle comprend un tube extérieur 42, en métal, et destiné à se centrer sur la partie mâle 40, et un cylindre de matière métallique ou céramique 43, inclus à l'intérieur du tube 42, et contenant axialement l'extrémité d'une fibre optique 44, dont la surface frontale est, elle-aussi, soigneusement polie. Des ressorts, non représentés, poussent les deux faces frontales de fibre optique pour les maintenir en contact l'une contre l'autre.

Ces figures montrent clairement que si une pièce mâle d'un certain type vient en appui sur une pièce femelle d'un type différent, il peut s'ensuivre un endommagement irréparable de l'une ou l'autre de ces pièces.

Il en serait de même avec d'autres types de contact, par exemple avec des pièces de contact du type "triaxial", non représentées ici.

Il convient de noter que le restant du connecteur est identique quelle que soit la forme des pièces de contact, y compris en ce qui concerne la bride 16.

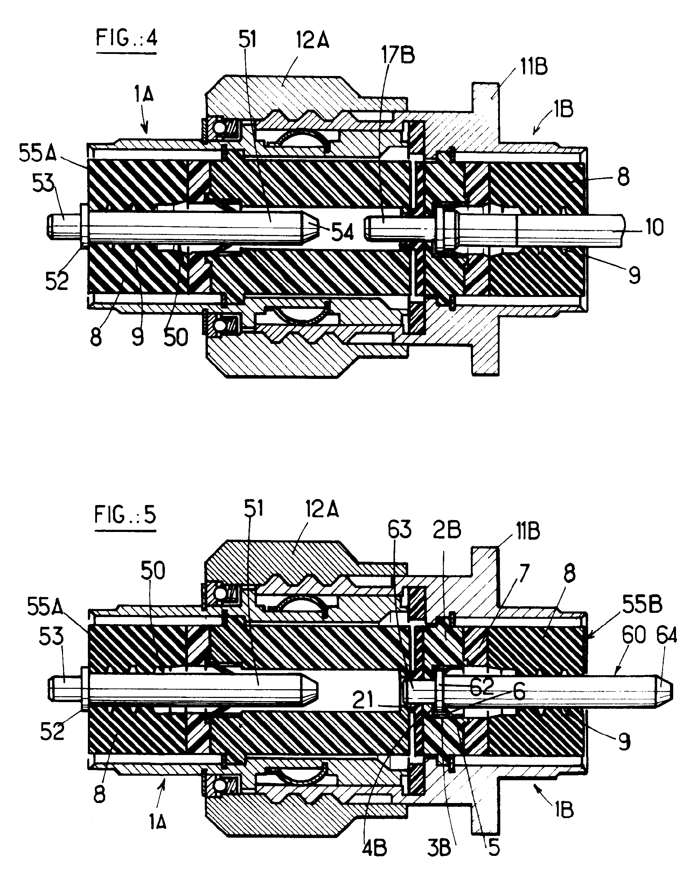

La figure 4 montre une réalisation selon l'invention. L'obturateur 50, en matière plastique isolante et opaque, comprend une partie cylindrique 51, pleine, et de diamètre extérieur sensiblement égal à celui du conducteur 10. Cette partie 51 se raccorde par un épaulement radial à une bride 52, laquelle est prolongée par une tige cylindrique 53, pleine, formant une partie de prise. L'extrémité de la tige 51 comporte un chanfrein 54.

Comme cela est représenté dans la position d'utilisation de l'obturateur 50, sa partie cylindrique est enfoncée dans la cavité du bloc arrière 8 de la partie femelle 1A, et y est maintenue par les nervures internes 9, qui assurent en même temps l'étanchéité de la cavité vis-à-vis de l'extérieur. La bride 52 est en appui sur la face extérieure 55A du bloc arrière 8. La longueur de la partie cylindrique 51 est calculée pour que son extrémité ne puisse pas venir en contact avec l'extrémité de l'élément de contact mâle 17B qui lui fait face. La longueur de cette partie cylindrique est cependant suffisante pour assurer un bon maintien et une bonne étanchéité par coopération avec les nervures 9.

La bride 52 doit être de diamètre suffisant pour empêcher que, lors de la mise en place ou après celle-ci, une fausse manoeuvre n'enfonce l'obturateur dans le bloc arrière plus profondément que cela a été indiqué. Un tel enfoncement excessif pourrait amener un contact non désiré avec l'extrémité de l'élément de contact mâle 17B, et l'endommager, surtout si celui-ci est de forme plus complexe que celle qui est représentée à la figure 4, par exemple une des formes des figures 2B ou 3B.

La tige cylindrique 53 sert ici uniquement d'élément de prise, et ne doit donc pas répondre, dans ce cas, à des spécifications précises.

Pour le cas où l'élément de contact mâle est un élément de transmission optique, on notera que l'obturateur, d'une part, est en une matière opaque, et, d'autre part, est en contact étanche avec les nervures 9, si bien qu'aucun rayonnement parasite ne peut atteindre l'élément de contact mâle. Comme la matière de correcteur est également isolante électriquement, les mêmes obturateurs peuvent remplacer des pièces de contact électriques et optiques, d'où une réduction des coûts.

La figure 5 est relative au cas où non seulement la pièce de contact femelle 13A, mais aussi la pièce de contact mâle 13B, sont absentes. La cavité interne du correcteur assemblé doit donc être obturée par ses deux extrémités.

Pour cela, en plus de l'obturateur 50 qu'on vient de décrire, et qui obture les partie femelle 1A du connecteur, on utilise un second obturateur 60 pour obturer la partie mâle 1B, et selon une modalité avantageuse, le second obturateur 60 est identique au premier obturateur 50.

Pour cela, on a inversé l'orientation de l'obturateur 60, c'est-à-dire que sa partie cylindrique 61, qui est identique à la partie cylindrique 51 de l'obturateur 50 est cette fois dirigée vers l'extérieur du connecteur, et sa tige 63 est dirigée vers l'intérieur du connecteur. La bride 62 vient cette fois en appui sur l'épaulement 4B du support 2B, et l'obturateur est retenu par les languettes élastiques 6 placéee dans l'alésage 3B, agissant sur cette bride.

Pour que cela soit possible, un certain nombre de conditions géométriques supplémentaires doivent être remplies :
- la longueur de la partie cylindrique 61 doit être suffisante pour que, lorsque la bride 62 est en appui sur l'épaulement 4B, cette partie 61 atteigne au moins une des nervures 9 du bloc arrière 8 de la partie mâle 1B, et de préférence fasse saillie vers l'extérieur au-delà de la face arrière 55B de ce bloc arrière, afin de faciliter son enlèvement éventuel,
- la bride 62 doit avoir une épaisseur voisine de celle de la bride16 de la pièce de contact mâle que l'obturateur 60 remplace, si cette bride est trop mince, elle est fragile, si elle est trop épaisse, elle ne peut pas être retenue par les lamelles élastiques 6 quand elle est en appui sur l'épaulaient 4B. En outre, le diamètre de cette bride doit être voisin de celui de la bride 16 : plus large, elle passerait difficilement à travers les rainures 9 ou même serait arrêtée par la contrepièce 7, plus étroite, elle ne remplirait plus le rôle d'arrêt contre la face arrière 55A du bloc arrière 8 de la partie femelle 1A, ainsi que cela a été exposé plus haut,
- la tige cylindrique 63 doit avoir de préférence une longueur suffisante pour pénétrer dans la cheminée 21 et faire saillie très légèrement au-delà de celle-ci, sans toutefois aller assez loin pour risquer un contact avec l'extrémité de la partie 51 de l'autre obturateur. Avantageusement, la tige 63 est assez courte pour ne pas entrer en contact avec une pièce de contact femelle 13A au cas où celle-ci aurait été maintenue. La raison d'une longueur minimale pour la tige 63 est d'empêcher une déformation par fluage ou autrement de la cheminée 21 sous l'effet de la poussée de la surface conique 22. En outre, le diamètre de la tige 63 doit, de préférence, être voisin de celui de l'élément de contact 17A qu'il remplace. Un diamètre trop petit assure un mauvais maintien de la cheminée. Un diamètre trop grand risque d'empêcher le passage dans la partie resserrée de l'alésage 3B qui fait suite à l'épaulement 4A. Avantageusement, la tige 63 présente un chanfrein 64 à son extrémité, pour faciliter sa mise en place par enfoncement dans le bloc arrière 8, à travers les rainures 9, et dans la cheminée 21.

L'expérience a montré que, pour la plupart des connecteurs normalisés actuellement en usage, les multiples conditions géométriques peuvent être remplies, et, même, que des obturateurs peuvent être utilisés pour des correcteurs différents mais comportant des pièces de contact de dimensions voisines.

La mise en place de l'obturateur 60 se fait exactement de la même manière que la mise en place d'une pièce de contact effectif : il suffit d'enfoncer l'obturateur 60, en faisant fléchir les nervures 9, jusqu'à ce que la bride 62 ait retenu les languettes 6 et soit retenue entre celles-ci et l'épaulement 3B. Pour retirer l'obturateur 60, il suffit d'écarter les languettes 6 à l'aide de la "plume" qui sert pour enlever les pièces de contact effectif, et de retirer lentement cette plume, qui entraîne l'obturateur par frottement.

## Revendications

1. Procédé de mise en oeuvre d'un connecteur électrique ou optique, formé de deux parties assemblable (1A, 1B) dont l'une comprend un support (2B) dit "mâle" traversé par au moins une cavité (3B) dite "mâle" destinée à recevoir une pièce de contact mâle (13B, 30, 40), ce support étant solidaire d'un "bloc arrière" (8) traversé par un alésage de diamètre calculé pour laisser passer un conducteur reliant la pièce de contact mâle à l'extérieur, en assurant un contact étanche avec ce conducteur, et l'autre partie comprend un support dit "femelle" (2A) traversé par au moins une cavité (3A) dite "femelle" destinée à recevoir une pièce de contact femelle (13A, 32, 42), ce support étant solidaire d'un "bloc arrière" traversé par un alésage de diamètre calculé pour laisser passer un conducteur reliant la pièce de contact femelle à l'extérieur en assurant un contact étanche avec ce conducteur, procédé dans lequel, s'il n'est pas prévu de pièce femelle dans une cavité femelle, on prévoit un obturateur (50) comprenant une partie cylindrique (51), de diamètre sensiblement égal à celui du conducteur correspondant, une partie de prise (53), et un épaulement radial (52) de diamètre supérieur à celui de ladite partie cylindrique et on enfonce ledit obturateur dans le passage correspondant, caractérisé en ce que l'on enfonce ladite partie cylindrique d'abord, jusqu'à ce que ledit épaulement (52) vienne en appui contre la face extérieure (55A) du "bloc arrière" (18), la longueur de la partie cylindrique de l'obturateur étant calculée pour qu'elle assure une étanchéité convenable de la cavité femelle vis-à-vis de l'extérieur, mais qu'elle ne puisse pas venir en contact avec une pièce de contact mâle pénétrant dans ladite cavité femelle quand le connecteur est assemblé.

2. Procédé selon la revendication 1, dans lequel la cavité mâle (3B) présente un épaulement (4B) dirigé à l'opposé de la partie femelle, après assemblage du connecteur, cette cavité étant alignée avec une cheminée tubulaire (21) prévue dans un tapis interfacial souple porté par la face du support mâle qui est tournée vers le support femelle,
caractérisé en ce qu'on utilise un obturateur (60) dont la partie de prise présente un second épaulement orienté à l'opposé de celui qui est adjacent à la partie cylindrique, et l'obturateur se prolonge, au-delà de ce second épaulement par une tige cylindrique (63)apte à pénétrer dans la cavité mâle au-delà de son épaulement et dans ladite cheminée tubulaire sans dépasser sensiblement celle-ci quand le second épaulement de l'obturateur est en appui sur l'épaulement de la cavité mâle et la longueur de la partie cylindrique de l'obturateur est suffisante pour faire saillie à l'extérieur du "bloc arrière" lorsque le second épaulement est en appui sur l'épaulement de la cavité mâle, si bien que l'obturateur peut également être utilisé, en cas de besoin, pour obturer la cavité mâle.

3. Procédé selon l'une des revendications 1 ou 2, caractérisé en ce que l'obturateur est en une matière à la fois isolante et opaque.

## Patentansprüche

1. Verfahren zum Benutzen eines elektrischen oder optischen Verbinders, der aus zwei zusammenfügbaren Teilen (1A, 1B) gebildet ist, von denen der eine einen als "männlich" bezeichneten Träger (2B) aufweist, welcher von mindestens einem als "männlich" bezeichneten Hohlraum (3B) durchdrungen ist, der zur Aufnahme eines männlichen Kontaktstückes (13B, 30, 40) dient, wobei dieser Träger mit einem "hinteren Block" (8) fest verbunden ist, der von einer Bohrung eines Durchmessers durchdrungen ist, welcher so bemessen ist, daß ein das männliche Kontaktstück mit dem Äußeren verbindender Leiter hindurchtreten kann, wobei gleichzeitig ein abgedichteter Kontakt mit diesem Leiter sichergestellt ist, und von denen das andere Teil einen als "weiblich" bezeichneten Träger (2A) aufweist, der von mindestens einem als "weiblich" bezeichneten Hohlraum (3A) durchdrungen ist, welcher zur Aufnahme eines weiblichen Kontaktstückes (13A, 32, 42) dient, wobei dieser Träger mit einem "hinteren Block" fest verbunden ist, der von einer Bohrung eines Durchmessers durchdrungen ist, welcher so bemessen ist, daß ein das weibliche Kontaktstück mit dem Äußeren verbindender Leiter hindurchtreten kann, wobei gleichzeitig ein abgedichteter Kontakt mit diesem Leiter sichergestellt ist, bei welchem Verfahren, falls kein weibliches Stück in einem weiblichen Hohlraum vorgesehen ist, ein Verschlußstück (50) vorgesehen wird, das einen zylindrischen Abschnitt (51), dessen Durchmesser im wesentlichen gleich dem des entsprechenden Leiters ist, einen Betätigungsabschnitt (53) und eine radiale Schulter (52) aufweist, dessen Durchmesser größer als der des zylindrischen Abschnittes ist, und dieses Verschlußstück in den entsprechenden Kanal eingetrieben wird,
dadurch gekennzeichnet, daß dieser zylindrische Abschnitt zunächst eingetrieben wird, bis die Schulter (52) an der äußeren Stirnseite (55A) des "hinteren Blocks" (18) anliegt, wobei die Länge des zylindrischen Abschnittes des Verschlußstückes so bemessen ist, daß er eine ausreichende Abdichtung des weiblichen Hohlraumes gegenüber dem Äußeren sicherstellt, jedoch nicht mit einem männlichen Kontaktstück in Berührung kommen kann, das in den weiblichen Hohlraum vorsteht, wenn der Verbinder zusammengesetzt ist.

2. Verfahren nach Anspruch 1, bei dem der männliche Hohlraum (3B) eine Schulter (4b) aufweist, die nach dem Zusammenbau des Verbinders dem weiblichen Teil entgegengerichtet ist, wobei dieser Hohlraum mit einem rohrförmigen Kanal (21) ausgerichtet ist, der in einer biegsamen Zwischenschicht vorgesehen ist, die von der Stirnseite des männlichen Trägers getragen wird, welcher dem weiblichen Träger zugewandt ist,
dadurch gekennzeichnet, daß ein Verschlußstück (60) verwendet wird, dessen Betätigungsabschnitt eine zweite Schulter aufweist, die derjenigen entgegengerichtet ist, die sich angrenzend an dem zylindrischen Abschnitt befindet, und das Verschlußstück über diese zweite Schulter hinaus durch eine zylindrische Stange (63) verlängert ist, die in den männlichen Hohlraum über seine Schulter hinaus sowie in den rohrförmigen Kanal einführbar ist, ohne sich über diesen im wesentlichen hinaus zu erstrecken, wenn die zweite Schulter des Verschlußstückes an der Schulter des männlichen Hohlraumes anliegt und die Länge des zylindrischen Abschnitts des Verschlußstückes ausreichend ist, um aus dem "hinteren Block" hinaus vorzustehen, wenn die zweite Schulter an der Schulter des männlichen Hohlraumes anliegt, so daß das Verschlußstück, falls erforderlich, ebenfalls zum Verschließen des männlichen Hohlraumes verwendet werden kann.

3. Verfahren nach Anspruch 1 oder 2, dadurch gekennzeichnet, daß das Verschlußstück aus einem Material besteht, das gleichzeitig isolierend und opak ist.

## Claims

1. A process for using an electrical or optical connector, formed of two assemblable parts one of which comprises a support termed "male" through which passes at least one cavity termed "male" designed to receive a male contact part, this support being securely attached to a "back block" through which passes a bore of diameter calculated to allow the passage of a conductor connecting the male contact part to the outside, while ensuring a leaktight contact with this conductor, and the other part comprises a support termed "female" through which passes at least one cavity termed "female" designed to receive a female contact part, this support being securely attached to a "back block" through which passes a bore of diameter calculated to allow the passage of a conductor connecting the female contct part to the outside while ensuring a leaktight contact with this conductor,
wherein, if no female part is provided in a female cavity, a closing device is provided comprising a cylindrical part, of diameter substantially equal to that of the corresponding conductor, and a part for gripping, at least in part of diameter greater than that of said cylindrical part and connected to the latter by a radial step, and said closing device is driven into the corresponding passage, said cylindrical part first, until said step comes to bear against the "back block", the length of the cylindrical part of the closing device being calculated so that it ensures an appropriate leaktightness of the female cavity with respect to the outside, but so that it cannot come into contact with a male contact part penetrating into said female cavity when the connector is assembled.

2. The process of Claim 1, wherein the male cavity has a step directed opposite to the female part, after assembly of the connector, this cavity being aligned with a tubular sleeve provided in a flexible interfacial layer borne by that face of the male support which is turned towards the female support,
and wherein a closing device is used whose part for gripping has a second step oriented opposite to that which is adjacent to the cylindrical part, and the closing device is extended, beyond this second step by a cylindrical rod able to penetrate into the male cavity beyond its step and into said tubular sleeve without projecting substantially beyond the latter when the second step of the closing device bears against the step of the male cavity and the length of the cylindrical part of the closing device is sufficient to project outside the "back block" when the second step bears against the step of the male cavity, with the result that the closing device may also be used, if the need arises, in order to close the male cavity.

3. The process of Claim 1, characterized in that the closing device is of a material both insulating and opaque.
